# EUROPÄISCHE PATENTANMELDUNG

(11) **EP 3 902 074 A1**
(43) Veröffentlichungstag der Anmeldung: **27.10.2021**
(21) Anmeldenummer: 20170392.3
(22) Anmeldetag: 20.04.2020
(51) Int. Cl.: H02G 5/08

(54) **MODULAR AUFGEBAUTER ABGANGSKASTEN ZUR KONTAKTIERUNG VON STROMSCHIENEN**

(71) Anmelder: Siemens Aktiengesellschaft, 80333 München (DE)
(72) Erfinder: Althoff, Sebastian, 40789 Monheim am Rhein (DE); Bertels, Frank, 50765 Köln (DE); Rottländer, Dirk, 50859 Köln (DE); Haar, Rainer, 53121 Bonn (DE)

(57) **Zusammenfassung**

Die Erfindung betrifft ein erstes Modul (2) eines Abgangskastens (1), insbesondere ein Modul (2) mit einer Kontaktanordnung, zur Kontaktierung von Stromschienen (12), ein zweites Modul (3) eines Abgangskastens (1), insbesondere ein Modul (3) mit einer Schaltfunktion in Form eines Schaltgeräts, zur Kontaktierung von Stromschienen sowie einen modular aufgebauten Abgangskasten (1) zur Kontaktierung von Stromschienen (12) mit einem separaten ersten Modul (2), welches zumindest ein einseitig offenes Gehäuse aufweist, in welchem eine erste Funktionseinheit angeordnet ist, und mit zumindest einem separaten zweiten Modul (3), welches zumindest ein einseitig offenes Gehäuse aufweist, in welchem eine zweite Funktionseinheit angeordnet ist.

## Beschreibung

Die Erfindung betrifft ein erstes Modul eines Abgangskastens, insbesondere ein Modul mit einer Kontaktanordnung, zur Kontaktierung von Stromschienen, ein zweites Modul eines Abgangskastens, insbesondere ein Modul mit einer Schaltfunktion in Form eines Schaltgeräts, zur Kontaktierung von Stromschienen sowie einen modular aufgebauten Abgangskasten für Stromschienen mit einem separaten ersten Modul, welches zumindest ein einseitig offenes Gehäuse aufweist, in welchem eine erste Funktionseinheit angeordnet ist, und mit einem separaten zweiten Modul, welches zumindest ein einseitig offenes Gehäuse aufweist, in welchem eine zweite Funktionseinheit angeordnet ist.

Luftisolierte Stromschienensysteme sind in der Regel in der Aufbaulage horizontal hochkant und nicht vertikal gestapelt installiert, um eine optimale elektrische Ausnutzung der Stromschienen durch eine vertikale Ventilation des Stromschienenpakets zu erreichen.

Die Abgangsstellen, welche sich üblicherweise auf der Ober- oder Unterkante des Stromschienenpakets befinden, sind folglich nur durch einen oberseitig angeordneten oder unterseitig angebrachten Abgangskasten zu erreichen, so dass die Zugänglichkeit des Abgangskastens unvorteilhaft ist. Günstiger ist eine bediensichere Zugänglichkeit von der Seite.

Demgemäß besteht die Aufgabe der vorliegenden Erfindung darin, einen Abgangskasten mit einer verbesserten Zugänglichkeit zu schaffen.

Diese Aufgabe wird erfindungsgemäß durch einzelne, separate Module eines Abgangskastens nach Anspruch 1 und 2 sowie durch einen modular aufgebauten Abgangskasten nach Anspruch 3 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch ein Modul eines Abgangskastens gelöst, insbesondere ein Modul mit einer Kontaktanordnung, zur Kontaktierung von Stromschienen, wobei das Modul zumindest ein einseitig offenes Gehäuse aufweist, in welchem eine erste Funktionseinheit angeordnet ist. Die erste Funktionseinheit weist eine erste mechanische Ausführung oder/und eine erste Funktion beispielsweise in Form einer Kontaktanordnung auf.

Die Aufgabe wird außerdem gelöst durch ein Modul eines Abgangskastens, insbesondere ein Modul mit einer Schaltfunktion in Form eines Schaltgeräts, zur Kontaktierung von Stromschienen, wobei das Modul zumindest ein einseitig offenes Gehäuse aufweist, in welchem eine zweite Funktionseinheit angeordnet ist. Die zweite Funktionseinheit weist eine zweite mechanische Ausführung oder/und eine zweite Funktion beispielsweise in Form eines Schaltgeräts auf.

Zudem wird die Aufgabe gelöst durch einen modular aufgebauten Abgangskasten zur Kontaktierung von Stromschienen mit zumindest einem separaten ersten Modul, welches zumindest ein einseitig offenes Gehäuse aufweist, in welchem eine erste Funktionseinheit angeordnet ist, und mit zumindest einem separaten zweiten Modul, welches zumindest ein einseitig offenes Gehäuse aufweist, in welchem eine zweite Funktionseinheit angeordnet ist.

Die Gehäuse für die ersten und zweiten Module sind vorzugsweise quaderförmig mit sechs Seitenteilen ausgebildet, einer Oberseite, einer Unterseite und vier die Oberseite mit der Unterseite verbindenden Seitenteilen. Ein zumindest einseitig offenes Gehäuse ist ein Gehäuse, welches an einer Seite seitenteilfrei ausgebildet ist oder nur einen Rahmen mit einer Durchgriffsöffnung oder eine Rasterung mit regelmäßig und/oder unregelmäßig angeordneten Durchgriffsöffnungen zur Kontaktierung des weiteren Moduls aufweist.

Der Kern der Erfindung besteht darin, dass die Funktionseinheit für die elektrische Kontaktierung von der Funktionseinheit für die Schaltvorrichtung in getrennten Modulen angeordnet sind. Dafür sind die Gehäusekonzepte der Module so individuell auf den jeweiligen Anwendungsfall anpassbar, dass eine einfache Zugänglichkeit für das Bedienpersonal für die jeweiligen Stromschienenanlagen berücksichtigt werden kann.

Durch die Aufbauweise des erfindungsgemäßen modularen Abgangskastens beispielsweise in Winkelform kann dieser in einen horizontalen Bereich, einer sogenannten tap-off unit z.B. zur Kontaktierung der Abgangsstellen, und einen vertikalen Bereich, einer device unit z. B. zur Unterbringung von Schaltgeräten, mit Zugänglichkeit von der Seite unterteilt werden.

Die beiden Funktionseinheiten können getrennt und variabel steckbar voneinander ausgestaltet werden, so dass die device unit bei gleichbleibender Positionierung der tap-off unit auf der linken oder rechten Seite des Stromschienenkanals installiert werden kann. Zudem ist eine differenzierte Bauweise der beiden Funktionseinheiten möglich, um so z. B. ein druckstabiles Gehäuse bei der device unit mit einem belüfteten Gehäuse der tap-off unit zu koppeln.

Eine vorteilhafte Ausführungsform des erfindungsgemäßen modular aufgebauten Abgangskastens kann darin bestehen, dass die erste Funktionseinheit in Form einer Kontaktanordnung zur Kontaktierung der Stromschienen ausgebildet ist.

Eine spezielle Ausführungsform des erfindungsgemäßen modular aufgebauten Abgangskastens kann darin bestehen, dass der zweite Funktionsblock zumindest ein Schaltgerät umfasst.

Eine Fortführung des Konzepts für den erfindungsgemäßen modular aufgebauten Abgangskastens kann darin bestehen, dass die zweite Funktionseinheit eine Schnittstelle für eine Kontaktierung zu einem Abgang aufweist.

Eine Erweiterung einer speziellen Ausgestaltung des erfindungsgemäßen Konzepts für den modular aufgebauten Abgangskasten kann vorsehen, dass das einseitig, offene Gehäuse für das erste und zweite Modul quaderförmig ausgebildet ist mit sechs möglichen Seitenteilen, wobei ein Seitenteil offen ausgebildet ist, um eine Anbindungsstelle zu einem zweiten Modul auszubilden.

Eine vorteilhafte Ausführungsform des erfindungsgemäßen modular aufgebauten Abgangskastens kann darin bestehen, dass das Gehäuse für das erste und das zweite Modul ein Gehäusekonzept mit einer Verbindungstechnik der einzelnen Seitenteile miteinander aufweist, welches derart ausgebildet ist, dass einzelne Seitenteile zu entfernen sind.

Es entspricht einer speziellen Ausführungsform des erfindungsgemäßen modular aufgebauten Abgangskastens, dass ein Seitenteil des Gehäuses des ersten Moduls eine regelmäßige oder/und unregelmäßige Rasterung mit Durchgriffsöffnungen aufweist.

Eine Fortführung des Konzepts für den erfindungsgemäßen modular aufgebauten Abgangskasten kann darin bestehen, dass die zu verbindenden Module eine gemeinsame Schnittstelle für die elektrische Kontaktierung aufweisen.

Eine Erweiterung einer speziellen Ausgestaltung des erfindungsgemäßen Konzepts für den modular aufgebauten Abgangskasten kann vorsehen, dass die elektrische Kontaktierung der zu verbindenden Module auf einer einseitig oder beidseitig bedruckten Leiterplatte oder einer Backplane ausgebildet ist. Unter einer Backplane wird hier ein Träger für elektrische Bauelemente verstanden, der Leitungen zum elektrischen Verbinden elektrischer Bauelemente aufweist. Vorzugsweise kann beispielsweise ein Anschluss eines Schaltgeräts vorderseitig durch eine Backplane geführt werden, um dann auf der Rückseite der Backplane, welche vorzugsweise der Gehäusewand gegenüberliegt, elektrisch zu kontaktieren.

Eine vorteilhafte Ausführungsform des erfindungsgemäßen modular aufgebauten Abgangskastens kann darin bestehen, dass die Seitenteile der zumindest einseitig, offenen Gehäuse zweier zu verbindender Module als einteilig mit dem jeweiligen Gehäuse ausgeführte Klappen oder/und als separate, vom Gehäuse zu entfernende Seitenteile oder/und komplett seitenteilfrei oder als eine Kombination dieser Ausführungsformen ausgeführt sind.

Es entspricht einer speziellen Ausführungsform des erfindungsgemäßen modular aufgebauten Abgangskastens, dass die Seitenteile einer Verbindungsstelle zweier Module als Rahmen oder als Seitenteil mit einer Durchgriffsöffnung oder als Seitenteil mir regelmäßig und/oder unregelmäßig angeordneten Durchgriffsöffnungen für die Kontaktierung ausgebildet sind.

Eine Fortführung des Konzepts für den erfindungsgemäßen modular aufgebauten Abgangskasten kann darin bestehen, dass die Seitenteile für die Gehäuse der Module durch eine Verbindungstechnik in Form von Verrasten oder Klemmen oder Stecken oder Schrauben ineinander zu fügen sind.

Eine Erweiterung einer speziellen Ausgestaltung des erfindungsgemäßen Konzepts für den modular aufgebauten Abgangskasten kann vorsehen, dass ein erstes Modul zur Kontaktierung von zumindest zwei zweiten Modulen ausgebildet ist.

Eine vorteilhafte Ausführungsform des erfindungsgemäßen modular aufgebauten Abgangskastens kann darin bestehen, dass die Kontaktierung von zwei Modulen über mindestens ein Adapterelement ausgebildet ist. Das Adapterelement kann als Haltevorrichtung oder/und für die elektrische Kontaktierung der Module ausgebildet sein.

Weitere Ausführungen und Vorteile der Erfindung werden nachfolgend anhand von Ausführungsbeispielen sowie anhand der Zeichnung erläutert.

Dabei zeigt:
Fig. 1 in einer perspektivischen Darstellung eine erste Ausführungsform eines erfindungsgemäßen modular aufgebauten Abgangskastens mit einem separaten ersten und zweiten Modul mit einer gemeinsamen Schnittstelle und einem Stromschienenpaket;
Fig. 2 in einer seitlichen Frontansicht der erfindungsgemäße modular aufgebaute Abgangskasten mit einem Zugangsbereich rechts vom Stromschienenpaket und einer Kontaktierung unterhalb des Stromschienenpakets nach Fig. 1;
Fig. 3 in einer perspektivischen Darstellung eine zweite Ausführungsform eines erfindungsgemäßen modular aufgebauten Abgangskastens mit einem separaten ersten und zweiten Modul mit einer gemeinsamen Schnittstelle und einem Stromschienenpaket;
Fig. 4 in einer seitlichen Frontansicht der erfindungsgemäße modular aufgebaute Abgangskasten mit einem Zugangsbereich links vom Stromschienenpaket und einer Kontaktierung unterhalb des Stromschienenpakets nach Fig. 3;
Fig. 5 in einer perspektivischen Darstellung ein Ausführungsbeispiel eines erfindungsgemäßen modular aufgebauten Abgangskastens mit zwei separaten zweiten Modulen mit jeweils einer Schalteinrichtung und einem separaten ersten Modul für die Kontaktierung des Stromschienenpakets;
Fig. 6 in einer seitlichen Frontansicht der erfindungsgemäße modular aufgebaute Abgangskasten in einer Sandwich-Anordnung mit zwei separaten zweiten Modulen rechts und links vom Stromschienenpaket und einem separaten ersten Modul als Verbindung zwischen den beiden zweiten Modulen nach Fig. 5.

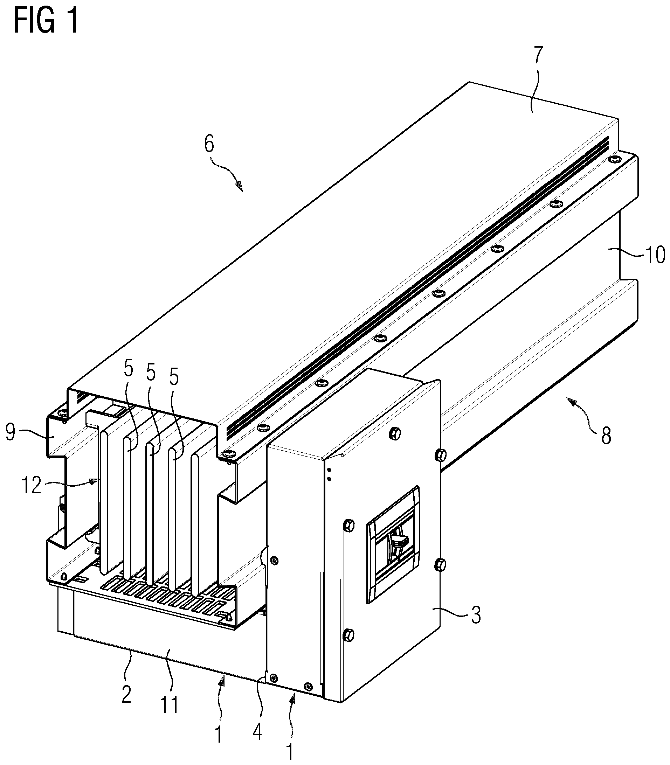

Fig. 1 zeigt eine erste Ausführungsform eines erfindungsgemäßen modular aufgebauten Abgangskastens 1 mit einem separaten ersten und zweiten Modul 2, 3 mit einer direkten gemeinsamen Schnittstelle 4 und einem Stromschienenpaket 5. Der modular aufgebaute Abgangskasten 1 ist aus den zwei Modulen 2, 3 zusammengesetzt und vorzugsweise in L-Form ausgebildet, wobei das Modul 2 mit der Kontaktanordnung unterhalb eines Gehäuses 6 für das Stromschienenpaket 5 angeordnet ist. Das Gehäuse 6 weist eine Oberseite 7, eine Unterseite 8 und zwei diese beiden Seitenteile verbindenden Seitenteil 9, 10 auf. Das Modul 3 mit einer Schaltfunktion vorzugsweise in Form eines Schaltgeräts ist seitlich, d.h. frontal für das Bedienpersonal, und damit leicht zugänglich am Gehäuse 6 des Stromschienenpakets 5 positioniert. Die Module 2, 3 sind vorzugsweise quaderförmig ausgebildet mit sechs Seitenteilen 11, einer Oberseite, einer Unterseite und vier die Oberseite mit der Unterseite verbinden Seitenteilen. Das Modul 2 weist in dieser Ausführungsform für einen erfindungsgemäßen Abgangskasten 1 zumindest zwei Seitenteile 11 auf, welche nicht vollflächig geschlossen sind. Das Seitenteil 11 des Moduls 2, welches an der Unterseite 8 des Gehäuses 6 für das Stromschienenpaket 5 anliegt, weist zumindest Durchgriffsöffnungen auf, um eine Kontaktierung zum Stromschienenpaket 5 zu ermöglichen. Zudem weist das Seitenteil 11, welches die direkte gemeinsame Schnittstelle 4 mit dem Modul 3 ausbildet zumindest Durchgriffsöffnungen auf, um eine elektrische Kontaktierung zum Modul 3 herzustellen. Die einzelnen Stromschienen 12 des Stromschienenpakets 5 sind vorzugsweise horizontal hochkant ausgerichtet, so dass ein einzelner Kontakt des Moduls 2 eine einzelne Stromschiene 12 kontaktiert.

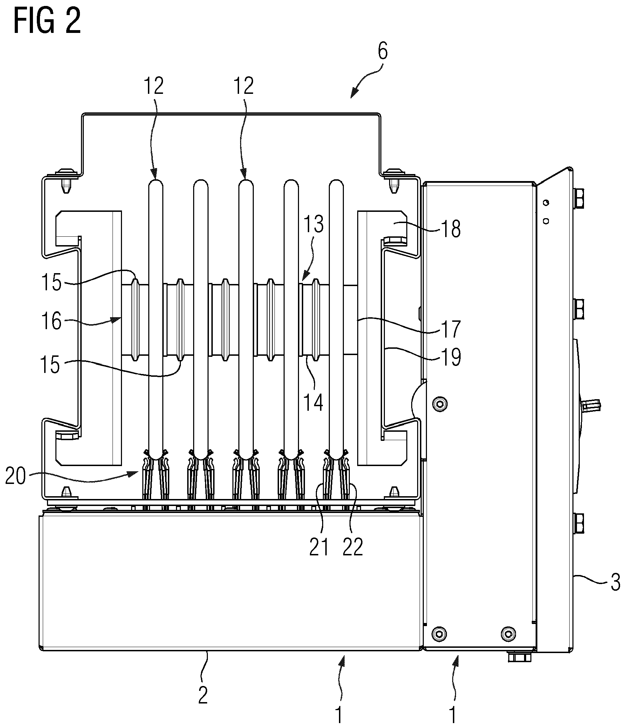

In Fig. 2 ist der erfindungsgemäße modular aufgebaute Abgangskasten 1 mit einem Zugangsbereich rechts vom Stromschienenpaket 5 und einer Kontaktierung unterhalb des Stromschienenpakets 5 nach Fig. 1 dargestellt. Die Stromschienenanordnung umfasst ein Schienenpaket 5, vorzugsweise aus einer Mehrzahl an Stromschienen 12, insbesondere Aluminiumschienen, welche positionsgleich hinsichtlich eines Endbereichs der Stromschienen 12 und parallel, vorzugsweise nebeneinander, angeordnet sind. Die Stromschienen 12 weisen eine Durchgriffsöffnung 13 auf, durch welche eine Halterung 14 geführt ist. Zwischen den einzelnen Stromschienen 12 des Schienenpakets 5 auf der Halterung 14 befinden sich stromisolierende Elemente 15. Die Halterung 14 weist zwei Endbereiche 16, 17 auf, welche mittels Fixierungselementen 18, vorzugsweise gleitend, positioniert sind. Vorzugsweise werden die Fixierungselemente 18 in verengten Gehäusebereichen 19 gelagert.

Fig. 2 zeigt außerdem die Kontaktierungsschnittstelle zwischen dem ersten Modul 2 und dem Stromschienenpaket 5. Die Kontaktierungsschnittstelle ist als indiskrete Kontaktierungsanordnung ausgebildet, d.h. das Modul 2 kann an jeder Position des Stromschienenpakets 5 die einzelnen Stromschienen 12 elektrisch kontaktieren. Es werden keine definierten Abgangsstellen benötigt. Die Kontaktierung ist abgangsstellenfrei ausgebildet. Im Modul 2 des modular aufgebauten Abgangskasten 1 sind Kontaktabgriffe 20 angeordnet, vorzugsweise sind es Lyra-Kontakte, welche durch das an das Gehäuse 6 angrenzende Seitenteil 11 des Moduls 2 geführt sind. Im Gehäuse 6 kontaktieren die Kontaktabgriffe 20 die Stromschienen 12, vorzugsweise federnd. Eine federnde Kontaktierung wird durch eine vorzugsweise U-förmige Ausbildung eines Zugriffskontakts des Kontaktabgriffs 20 mit zwei Kontaktzungen 21, 22 umgesetzt. Die Stromschiene 12 ist bei dieser Ausführungsform zwischen den Kontaktzungen 21, 22 angeordnet.

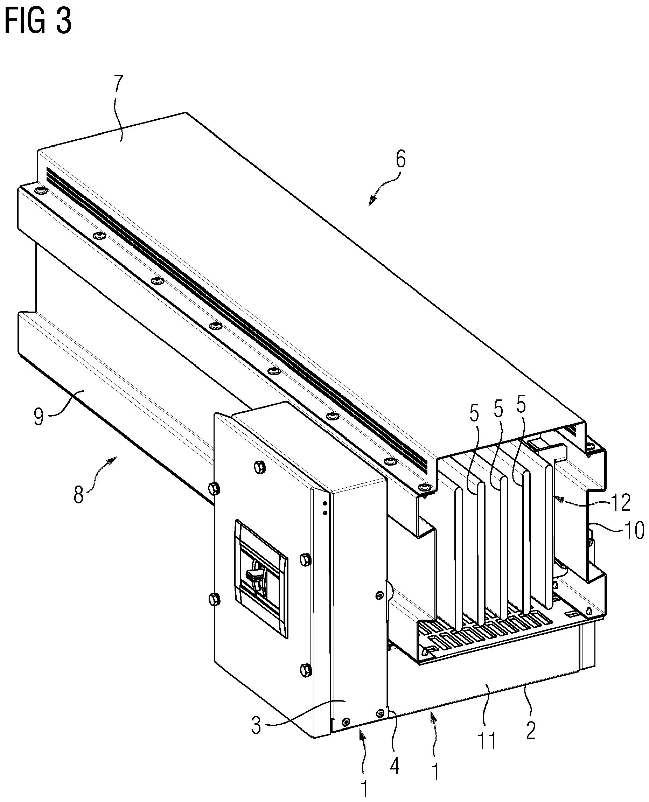

Fig. 3 zeigt eine zweite Ausführungsform eines erfindungsgemäßen modular aufgebauten Abgangskastens 1 mit einem separaten ersten und zweiten Modul 2,3 mit einer direkten gemeinsamen Schnittstelle 4 und einem Stromschienenpaket 5. Die Ausführungsform in Fig. 3 unterscheidet sich von der Ausführungsform in Fig. 1 dadurch, dass das Modul 3 mit der Schaltfunktion in Form eines Schaltgeräts hier linksseitig und frontal vom Stromschienenpaket 5, aber weiterhin leicht zugänglich für das Bedienpersonal, angeordnet ist.

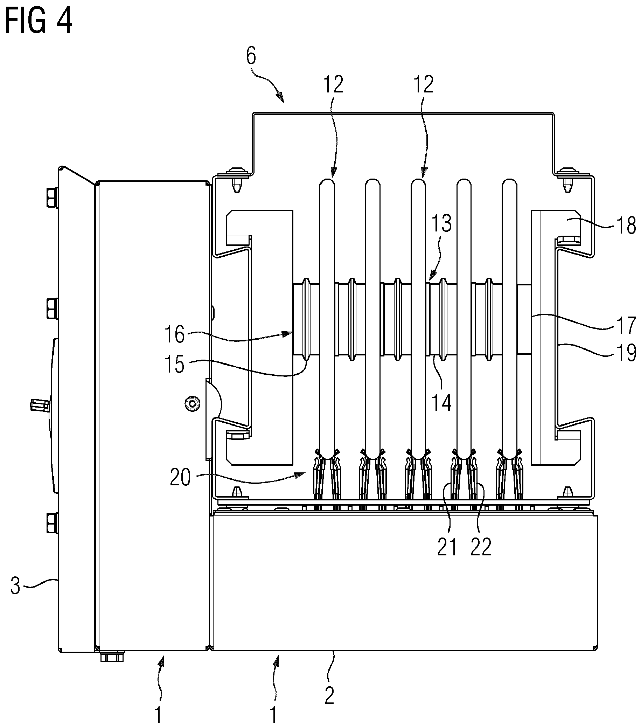

In Fig. 4 ist der erfindungsgemäße modular aufgebaute Abgangskasten 1 mit einem Zugangsbereich linksseitig vom Stromschienenpaket 5 und einer Kontaktierung unterhalb des Stromschienenpakets 5 nach Fig. 3 dargestellt. Die Kontaktierung des Stromschienenpakets 5 erfolgt entsprechend der Darstellung aus der Fig. 2.

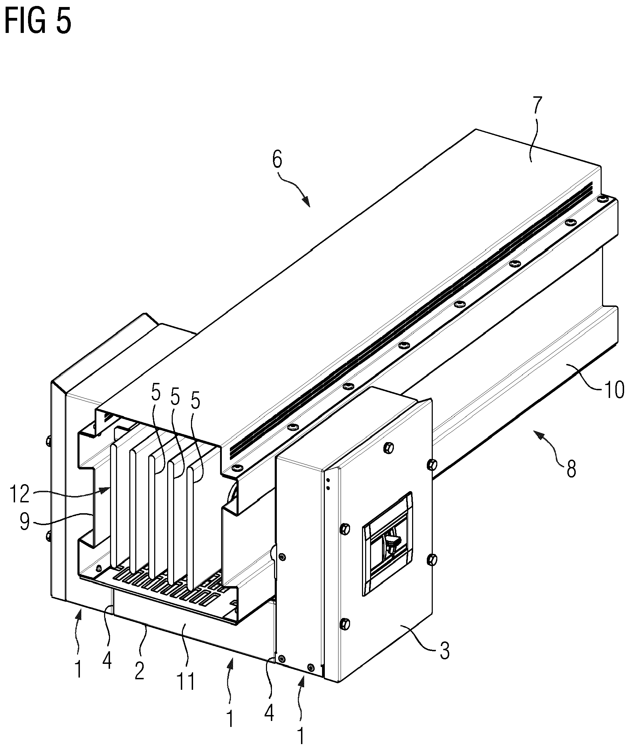

Fig. 5 zeigt ein Ausführungsbeispiel eines erfindungsgemäßen modular aufgebauten Abgangskastens 1 mit zwei separaten zweiten Modulen 3 mit jeweils einer Schalteinrichtung und einem separaten ersten Modul 2 für die Kontaktierung des Stromschienenpakets 5. Die Ausführungsform in Fig. 5 unterscheidet sich von den Ausführungsformen in Fig. 1 und 3 dadurch, dass das zwei zweite Module 3 mit einer Schaltfunktion in Form eines Schaltgeräts linksseitig bzw. rechtsseitig frontal, aber weiterhin leicht zugänglich für das Bedienpersonal, angeordnet sind, wobei beide Module 3 jeweils eine direkte gemeinsame Schnittstelle 4 mit einem Modul 2 für die Kontaktierung eines Stromschienenpakets 5 aufweisen, welches unterhalb des Stromschienenpakets 5 angeordnet ist.

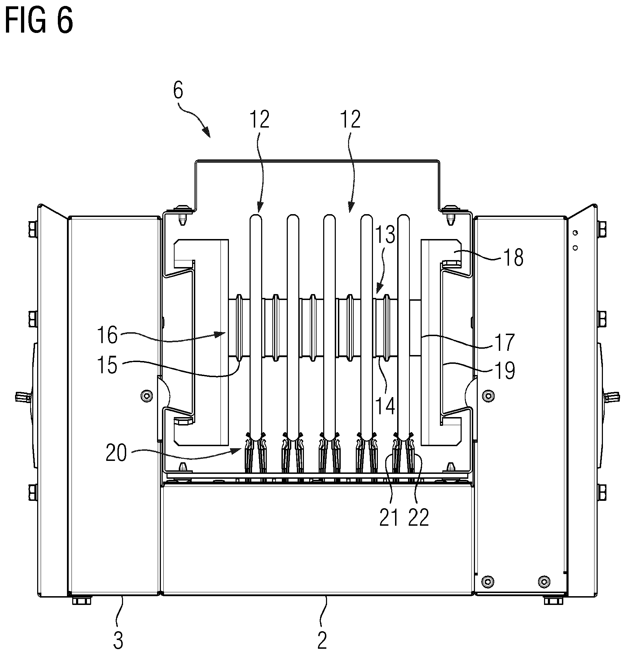

In Fig. 6 ist der erfindungsgemäße modular aufgebaute Abgangskasten 1 in einer Sandwich-Anordnung mit zwei separaten zweiten Modulen 3 rechtsseitig und linksseitig vom Stromschienenpaket 5 und einem separaten ersten Modul 2 als Verbindung zwischen den beiden zweiten Modulen 3 nach Fig. 5 dargestellt. Die Kontaktierung des Stromschienenpakets 5 erfolgt entsprechend der Darstellung aus den Fig. 2 und 4.

Der erfindungsgemäße modular aufgebaute Abgangskasten zeichnet sich dadurch, dass die Module mit der ersten Funktionseinheit und die Module mit der zweiten Funktionseinheit im weitesten Sinn als Schüttgut vorproduziert werden können und durch ein auf das Anwendungsbeispiel abgestimmtes Gehäuse individuell komplettiert werden. Das Konzept für den Aufbau des erfindungsgemäßen Abgangskastens aus Einzelmodulen folgt einem Baukastensystem, welches problemlos erweitert werden kann, ohne dass die Zugänglichkeit für das Bedienpersonal erschwert wird.

### Bezugszeichenliste

- 1: Abgangskasten
- 2: Erstes Modul
- 3: Zweites Modul
- 4: Schnittstelle
- 5: Stromschienenpaket
- 6: Gehäuse
- 7: Oberseite
- 8: Unterseite
- 9: Seitenteil
- 10: Seitenteil
- 11: Seitenteil
- 12: Stromschiene
- 13: Durchgriffsöffnung
- 14: Halterung
- 15: Stromisolierendes Element
- 16: Endbereich
- 17: Endbereich
- 18: Fixierungselement
- 19: Verengter Gehäusebereich
- 20: Kontaktabgriff
- 21: Kontaktzunge
- 22: Kontaktzunge

## Patentansprüche

1. Modul (2) eines Abgangskastens (1), insbesondere ein Modul (2) mit einer Kontaktanordnung, zur Kontaktierung von Stromschienen (12), wobei das Modul (2) zumindest ein einseitig offenes Gehäuse aufweist, in welchem eine erste Funktionseinheit angeordnet ist.

2. Modul (3) eines Abgangskastens (1), insbesondere ein Modul (3) mit einer Schaltfunktion in Form eines Schaltgeräts, zur Kontaktierung von Stromschienen (12), wobei das Modul (3) zumindest ein einseitig offenes Gehäuse aufweist, in welchem eine zweite Funktionseinheit angeordnet ist.

3. Modular aufgebauter Abgangskasten (1) zur Kontaktierung von Stromschienen (12) mit zumindest einem separaten ersten Modul (2), welches zumindest ein einseitig offenes Gehäuse aufweist, in welchem eine erste Funktionseinheit angeordnet ist, und mit zumindest einem separaten zweiten Modul (3), welches zumindest ein einseitig offenes Gehäuse aufweist, in welchem eine zweite Funktionseinheit angeordnet ist.

4. Modular aufgebauter Abgangskasten (1) nach Anspruch 3, **dadurch gekennzeichnet, dass** die erste Funktionseinheit in Form einer Kontaktanordnung zur Kontaktierung der Stromschienen (12) ausgebildet ist.

5. Modular aufgebauter Abgangskasten (1) nach Anspruch 3 oder 4, **dadurch gekennzeichnet, dass** die zweite Funktionseinheit zumindest ein Schaltgerät umfasst.

6. Modular aufgebauter Abgangskasten (1) nach einem der Ansprüche 3 bis 5, **dadurch gekennzeichnet, dass** die zweite Funktionseinheit eine Schnittstelle für eine Kontaktierung zu einem Abgang aufweist.

7. Modular aufgebauter Abgangskasten (1) nach einem der Ansprüche 3 bis 6, **dadurch gekennzeichnet, dass** das einseitig, offene Gehäuse für das erste und zweite Modul (2, 3) quaderförmig ausgebildet ist mit sechs möglichen Seitenteilen (11), wobei ein Seitenteil (11) offen ausgebildet ist, um eine Anbindungsstelle zu einem zweiten Modul (2, 3) auszubilden.

8. Modular aufgebauter Abgangskasten (1) nach einem der Ansprüche 3 bis 7, **dadurch gekennzeichnet, dass** das Gehäuse für das erste und das zweite Modul (2, 3) ein Gehäusekonzept mit einer Verbindungstechnik der einzelnen Seitenteile (11) miteinander aufweist, welches derart ausgebildet ist, dass einzelne Seitenteile (11) zu entfernen sind.

9. Modular aufgebauter Abgangskasten (1) nach einem der Ansprüche 3 bis 8, **dadurch gekennzeichnet, dass** ein Seitenteil (11) des Gehäuses des ersten Moduls (2) eine regelmäßige oder/und unregelmäßige Rasterung mit Durchgriffsöffnungen aufweist.

10. Modular aufgebauter Abgangskasten (1) nach einem der Ansprüche 3 bis 9, **dadurch gekennzeichnet, dass** die zu verbindenden Module (2, 3) eine gemeinsame Schnittstelle (4) für die elektrische Kontaktierung aufweisen.

11. Modular aufgebauter Abgangskasten (1) nach einem der Ansprüche 3 bis 10, **dadurch gekennzeichnet, dass** die elektrische Kontaktierung der zu verbindenden Module (2, 3) auf einer einseitig oder beidseitig bedruckten Leiterplatte oder einer Backplane ausgebildet ist.

12. Modular aufgebauter Abgangskasten (1) nach einem der Ansprüche 3 bis 11, **dadurch gekennzeichnet, dass** die Seitenteile (11) der zumindest einseitig, offenen Gehäuse zweier zu verbindender Module (2, 3) als einteilig mit dem jeweiligen Gehäuse ausgeführte Klappen oder/und als separate, vom Gehäuse zu entfernende Seitenteile (11) oder/und komplett seitenteilfrei oder/und als eine Kombination dieser Ausführungsformen ausgeführt sind.

13. Modular aufgebauter Abgangskasten (1) nach einem der Ansprüche 3 bis 11, **dadurch gekennzeichnet, dass** die Seitenteile (11) einer Verbindungsstelle zweier Module (2, 3) als Rahmen oder als Seitenteil (11) mit einer Durchgriffsöffnung oder als Seitenteil (11) mit regelmäßig und/oder unregelmäßig angeordneten Durchgriffsöffnungen für die Kontaktierung ausgebildet sind.

14. Modular aufgebauter Abgangskasten (1) nach einem der Ansprüche 3 bis 13, **dadurch gekennzeichnet, dass** die Seitenteile (11) für die Gehäuse der Module (2, 3) durch eine Verbindungstechnik in Form von Verrasten oder Klemmen oder Stecken oder Schrauben ineinander zu fügen sind.

15. Modular aufgebauter Abgangskasten (1) nach einem der Ansprüche 3 bis 14, **dadurch gekennzeichnet, dass** ein erstes Modul (2) zur Kontaktierung von zumindest zwei zweiten Modulen (3) ausgebildet ist.

16. Modular aufgebauter Abgangskasten (1) nach einem der Ansprüche 3 bis 15, **dadurch gekennzeichnet, dass** die Kontaktierung von zwei Modulen (2, 3) über mindestens ein Adapterelement ausgebildet ist.
